# EUROPÄISCHE PATENTANMELDUNG

(11) **EP 1 547 839 A1**
(43) Veröffentlichungstag der Anmeldung: **29.06.2005**
(21) Anmeldenummer: 04030452.9
(22) Anmeldetag: 22.12.2004
(51) Int. Cl.: B60J 11/00, B32B 27/12, D06N 7/00

(54) **Verbundvliesstoff und Verfahren zu dessen Herstellung**

(30) Priorität: 18.06.2004 DE 102004029596; 18.06.2004 DE 102004029597; 23.12.2003 DE 20319939 U; 23.12.2003 DE 20319938 U
(71) Anmelder: Oertel GmbH, 95361 Ködnitz (DE)
(72) Erfinder: Oertel, Harald, 95361 Ködnitz (DE)
(74) Vertreter: Pröll, Jürgen, Dipl.-Ing.

(57) **Zusammenfassung**

Die Erfindung betrifft einen Verbundvliesstoff und ein verfahren zu dessen Herstellung. Der Verbundvliesstoff besteht aus einem ein- oder mehrlagigen Vliesstoff, welcher einseitig mit Polymeren beschichtet oder mit einer Folie bestehend aus Polymeren laminiert ist. Die Dicke der Polymerbeschichtung oder Laminierung beträgt vorzugsweise 15 bis 200 µm und Festigkeit des Verbundes wird maßgeblich von der Polymerbeschichtung oder Laminierung übernommen.

## Beschreibung

Die Erfindung betrifft einen Vliesstoffverbund, ein Verfahren zu dessen Herstellung und eine Verpackung hergestellt aus dem Verbundvliesstoff.

Es ist bekannt, zur Herstellung eines Vliesstoffverbundes ein Substrat mit einer Polymerfolie zu beschichten. Bei den zu verwendenden Substraten handelt es sich um nach bekannten Vlies-Herstellungsverfahren produzierte Substrate. Das Substrat kann beispielsweise ein wärmeverbundenes, wasserstrahlverfestigtes, spinnverfestigtes oder schmelzgeblasenes Vlies sein.

Weiterhin existieren diverse bekannte Laminierverfahren. So kann beispielsweise das Substrat und das mit dem Substrat zu verbindende Schicht, beispielsweise eine Folie, mittels Klebstoff oder durch Wärme und Druck oder durch eine Kombination dieser beiden Mittel verbunden werden.

So ist aus EP-A-0 955 158 ein Laminat mit wenigstens einer wärmeverbundenen Vlies-Schicht aus kardierten Polyolefin-Stapelfasern, auf die wenigstens eine Schicht aus einer thermoplastischen Folie laminiert ist, bekannt. Die Polyolefin-Fasern weisen eine oxitativ degradierte äußere Oberfläche auf.

Aus EP-A-0 740 714 ist ein ausdehnbarer Textilverbundstoff bekannt. Dieser Textilverbundstoff besteht aus mindestens zwei Schichten, wobei der genannte Textilverbundstoff mindestens eine Schicht umfasst, die Multipolymerfasern, gebildet aus einem Gemisch von zwei miteinander nicht mischbaren Polymeren, aufweist. Eines dieser Polymere ist ein Propylenpolymer, das andere ein Polyethylen, wobei mindestens eines davon als dominante kontinuierliche Phase und das Andere als eine dispergierte Phase vorhanden ist. Die genannten Phasen sind durch eine Vielzahl von Bindungen miteinander verbunden, um einen kohärenten, dehnbaren Faserflor zu bilden, wobei der kohärente, dehnbare Faserflor einen Taber-Oberflächenabriebwert von mehr als 10 Zyklen und eine Dehnung bei der Spitzenlast in mindestens einer der Richtungen der Maschinenrichtungen und der Richtungen quer zur Maschinenrichtung von mindestens 70 % aufweist. Außerdem umfasst der Textilverbundstoff eine zweite dehnbare Schicht, welche an den genannten kohärenten, dehnbaren Faserflor angefügt ist.

Aus EP-A-0 390 622 ist ein Versteifungsstoff und ein Verfahren zu seiner Herstellung offenbart. Der Versteifungsstoff besteht aus einem gewirkten oder gewebten textilen Trägermaterial und mindestens einem Vlies. Ein Teil der Fasern des oder der Vliese ist mit dem gewirkten oder gewebten Textilien Trägermaterial durch Fluidstrahlvernadelung verwirrt.

Aus DE-A-40 15 120 ist eine textile Werkstoffbahn zur Herstellung von Lkw-Planen bekannt. Die Werkstoffbahn besteht aus einem Träger aus Polyester-, Polyamid- oder Polypropylenfasern, welche auf mindestens einer Seite über ihre gesamte Fläche mit einem schmelzbaren Polyolefin-Co- oder -Terpolymere oder dergleichen beschichtet ist. Diese genannten Stoffe werden unter Verwendung eines Katalysatorsystems auf der Basis von Übergangsmetallen aus der Schmelze vollflächig auf den Träger aufgebracht.

Aus DE-A-196 34 196 ist ein Laminat und ein Verfahren zu seiner Herstellung und seiner Verwendung offenbart. Das Laminat umfasst eine offenporige Matrixstruktur und einen darauf liegenden porösen Polymerfilm. In einer Unterdruckbeschichtungsvorrichtung wird der Matrixstruktur eine Polymerschmelze aufgebracht. Hierbei wird die Polymerschmelze in Richtung des Unterdrucks der Beschichtungsvorrichtung angesaugt wird, wobei Blasen gebildet werden, die wenigstens zum Teil überdehnt aufplatzen und unter Bildung des porösen Polymerfilms erkalten. Auf diese Weise werden durch Formschluss mit der Matrixstruktur die Materialien verbunden, wobei der Polymerfilm im Wesentlichen eine Abbildung der Matrixstrukturoberfläche darstellt.

Nachteilig bei allen derartigen Verbundstoffen ist, dass in sämtlichen Fällen die Reißfestigkeit des Verbundes maßgeblich von der Textilstruktur und dem Textil übernommen wird. Hierdurch wird eine hohe Dehn- und Reißfestigkeit im Endbereich der Ausdehnungsfähigkeit des Materials erreicht.
Nachteilig bei den bekannten Verbundstoffen ist weiterhin, dass das Material zumeist sehr schwer wird und nicht an die notwendigen Anforderungen anpassbar ist. Außerdem muss auf die Dehn- und Reißfestigkeit des Vliesstoffes mittel diverser Techniken eingewirkt werden, um diese zu erhöhen und zu verbessern. Hierzu wird in erster Linie vom Textil/Träger selbst ausgegangen und dessen Dehn- und Reißfestigkeit erhöht, beispielsweise durch das Einbringen von Bändchengewebe und anderen Trägern. Daher werden bei den derzeitigen im Markt befindlichen Vliesverbundstoffen die Reißfestigkeit und die damit verbundene Reißdehnung in den Vordergrund gestellt. Dies hat aber zur Folge, dass eine Optimierung des Vlieses in Bezug auf Weichheit und Kratzschutz nicht vorgenommen werden kann.

Der Anfangsfestigkeit und der damit verbundenen minimalen Dehnung bei relativ geringen Kräften bis 5 N pro 5 cm wird hingegen keine Bedeutung beigemessen.

Diese Nachteile werden durch den Vliesstoff gemäß der Erfindung gelöst. Das spezielle Herstellungsverfahren ermöglicht die einfache und sichere Herstellung des Produktes und ermöglicht zugleich eine Optimierung des Vliesstoffes in bisher nicht ermöglichte und angedachte Richtungen, wie zum Beispiel Kratzschutz und Weichheit oder Verträglichkeit des Vlieses.

Für den Vliesstoff, der aus einer oder mehreren Lagen Vliesstoff bestehen kann, wird als Grundmaterial synthetische, natürliche oder halbsynthetische Stapelfaser verwendet. Diese Fasern werden in bekannter Weise zu einem einoder mehrlagigen Vliesstoff verarbeitet.

Bei einem mehrlagig aufgebauten Verbund kann ein Teil dieses Verbundes in Spinnvliestechnik hergestellt. Die Verfestigung des Vliesstoffes erfolgt durch Nadeltechnik, Wasserstrahltechnik oder thermisch, bzw. aus einer Kombination dieser Techniken.

Der auf diese Weise entstandene Vliesverbundstoff wird mit Polymeren (Polypropylen, Polyethylen, Polyester, Polyamid u.a.) direkt beschichtet (extrusionsbeschichtet) oder mit einer Folie aus vergleichbaren Polymeren laminiert. Das Gewicht des Vliesverbundstoffes beträgt 30 bis 180 g/qm, die Dicke der Polymerbeschichtung beträgt 15 bis 200 µm.

Als besonders vorteilhaft hat sich erwiesen, ein Stapelfaservlies aus 70 % PES (Polyester), 30 % Viskose mit einem Gewicht von 80 g/qm zu verwenden, welches mittels Wasserstrahltechnik verfestigt wird. Als Beschichtung wird 40 g/qm Polypropylen/Polyester verwendet.

Durch den Aufbau und die Laminierung wird bei dem Verbundvliesstoff die Festigkeit des Verbundes maßgeblich von der Polymerbeschichtung übernommen, dazu trägt maßgeblich die homogene Verbindung in der Grenzfläche Vlies-Polymere bei, die durch die gezielte Faserauswahl erreicht wird.

Durch den Aufbau, insbesondere die Übernahme der Festigkeit des Verbundes durch die Polymerbeschichtung, zeichnet sich das Produkt durch seine hohe Anfangsfestigkeit und eine damit verbundene minimale Dehnung bei Kräften bis 30 N pro 5 cm aus.

Durch die hohe Anfangsfestigkeit wird eine Dehnung und ein Längen des Verbundvliesstoffes bei den normalen Anforderungen an das Material weitgehend unterbunden. Insbesondere für die Verwendung des Verbundvliesstoffes zur Verhüttung und Verpackung von Teilen zum Transport, so z.B. zur Ummantelung von Fahrzeugen, Maschinenteilen usw. beim Transport zeigt sich der Verbundvliesstoff auf Grund seiner Materialeigenschaften für Transportanforderungen bestens geeignet. Die aus dem Verbundvliesstoff hergestellte Verpackung, Verhüttung oder Ummantelung bleibt maßstabiler und kann somit weniger Schaden (Kratzer in empfindlichen Oberflächen) am verpackten Produkt verursachen.

Durch die Verlagerung der Anforderung von Festigkeit und minimaler Dehnung vom Textil bzw. Träger der Polymerbeschichtung/Folie auf die Polymerbeschichtung/Folie selbst ist es möglich, das Textil bzw. den Träger im Bezug auf seine Eigenschaft von Weichheit und Kratzschutz zu optimieren.

Durch geeignete Faserauswahl (anteilige Schmelzfasern und/oder Bicomponenten-Fasern) und/oder ein Abweichen von sortenreinen Rohstoffen kann der Verbundvliesstoff optimal auf thermische, Ultraschall-Hochfrequenzschweißvorgänge, aber auch auf konventionell ausgeführte Verbindungsnähtechniken abgestimmt werden. Außerdem wird durch die gezielte Faserauswahl eine homogene Verbindung in der Grenzfläche Vlies-Polymere erzielt, welche maßgeblich zur Übernahme der Festigkeit und minimaler Dehnung des Verbundvliesstoffes dient.

Die Schmelzfasern und/oder Bicomponenten-Fasern werden in vorteilhafter Weise bereist bei der Herstellung des Vlieses in dieses eingebracht und möglicht homogen im Vlies verteilt, oder bei der Verfestigung des Vlieses in selbiges eingebracht.

In einer weiteren vorteilhaften Ausgestaltung werden die Schmelzfasern und/oder Bicomponenten-Fasern im Vlies gezielt an der Grenzfläche zwischen Vlies und Polymere angeordnet.

Durch den Einsatz von nicht polymeren Fasern wie zum Beispiel einem Viskoseanteil wird eine Armierung der geschmolzenen Naht erzielt, die weit höhere Nahtfestigkeiten aufweist, als bei einem sortenrein aufgebauten Verbundvliesstoff.

Das besondere des Vliesstoffes ist zum Einen ein Anteil aus höherschmelzenden bzw. nichtschmelzenden (synthetischen bzw. nichtsynthetischen Fasern), die die Festigkeit der Schweißnaht verbessern, zum Anderen ein Anteil einer Schmelzfaser (Bicomponentenfasern), der die optimale Verbindung zur späteren Polymerbeschichtung ermöglicht.

Der Vliesstoff zeichnet sich durch eine matrixartige Struktur aus, welche besonders der Beschichtung der eingangs genannten Art zu Gute kommt.

Außerdem eignet sich der Vliesstoff zur beschriebenen Beschichtung und dann als Verpackungsmaterial für Maschinenteile, Fahrzeuge etc.

## Patentansprüche

1. Verfahren zur Herstellung eines Verbundvliesstoffes wobei ein Vliesstoff, bestehend aus mindestens einer Lage Vliesstoff, oder ein Verbund von Vliesstoffen, an einer seiner Flächen mit Polymeren beschichtet wird derart, dass die Dicke der Polymerbeschichtung 15 bis 200 µm beträgt und Festigkeit des Verbundes maßgeblich von der Polymerbeschichtung übernommen wird, wobei das Gewicht des Vliesverbundstoffes 30 bis 180 g/qm beträgt.

2. Verfahren zur Herstellung eines Verbundvliesstoffes wobei ein Vliesstoff, bestehend aus mindestens einer Lage Vliesstoff, oder ein Verbund von Vliesstoffen, an einer seiner Flächen mit einer Folie, bestehend aus Polymeren, laminiert wird, die Dicke der Folie 15 bis 200 µm beträgt und Festigkeit des Verbundes maßgeblich von der Folie übernommen wird, wobei das Gewicht des Vliesverbundstoffes 30 bis 180 g/qm beträgt.

3. Verfahren zur Herstellung eines Verbundvliesstoffes nach Anspruch 1 oder 2,
**dadurch gekennzeichnet, dass**
als Grundmaterial für den Vliesstoff synthetische, natürliche oder halbsynthetische Stapelfasern verwendet werden, welche zu einem einoder mehrlagigen Vliesstoff verarbeitet werden.

4. Verfahren zur Herstellung eines Verbundvliesstoffes nach einem oder mehreren der vorhergehenden Ansprüche,
**dadurch gekennzeichnet, dass**
bei einem mehrlagigen Vliesstoff der Verbund zumindest teilweise in Spinnvliestechnik hergestellt wird und/oder eine Verfestigung des Vliesstoffes durch Nadeltechnik, Wasserstrahltechnik oder durch thermische Techniken vorgenommen wird.

5. Verfahren zur Herstellung eines Verbundvliesstoffes nach einem oder mehreren der vorhergehenden Ansprüche,
**dadurch gekennzeichnet, dass**
bis zu 70% Polyester und 30% Viskose mit einem Gewicht von ca. 80g/qm bei der Herstellung des Vliesstoffes verwendet werden.

6. Verfahren zur Herstellung eines Verbundvliesstoffes nach einem oder mehreren der vorhergehenden Ansprüche,
**dadurch gekennzeichnet, dass**
die Vliesstoffoberfläche direkt extrusionsbeschichtet wird und/oder zur Beschichtung 40g/qm Polypropylen oder Polyester verwendet wird.

7. Verfahren zur Herstellung eines Verbundvliesstoffes nach einem oder mehreren der vorhergehenden Ansprüche,
**dadurch gekennzeichnet, dass**
durch die Laminierung des Vliesstoffes mit der Folie aus Polymeren oder der Beschichtung des Vliesstoffes mit Polymeren die Festigkeit des Verbundvliesstoffes maßgeblich von der Folie aus Polymeren oder den auf den Verbundvliesstoff aufgebrachten Polymeren übernommen wird.

8. Verfahren zur Herstellung eines Verbundvliesstoffes nach Anspruch 9,
**dadurch gekennzeichnet, dass**
durch eine gezielte Faserauswahl und/oder ein Abweichen von sortenreinen Rohstoffen eine homogene Verbindung in der Grenzfläche Vlies-Polymere erzielt wird, welche maßgeblich zur Übernahme der Festigkeit und minimaler Dehnung des Verbundvliesstoffes durch die Polymere dient.

9. Verfahren zur Herstellung eines Verbundvliesstoffes nach Anspruch 10,
**dadurch gekennzeichnet, dass**
eine gezielte Faserauswahl erfolgt, indem anteilige Schmelzfasern oder Bicomponenten-Fasern verwendet werden und/oder die Schmelzfasern oder Bicomponenten-Fasern gezielt bei der Herstellung des Vlieses und/oder bei der Verfestigung des Vlieses in das Vlies eingebracht werden.

10. Verfahren zur Herstellung eines Verbundvliesstoffes nach einem oder mehreren der vorhergehenden Ansprüche,
**dadurch gekennzeichnet, dass**
als Polymere Polypropylen, Polyethylen, Polyester und/oder Polyamid verwendet wird.

11. Verbundvliesstoffes bestehend aus einem ein- oder mehrlagigen Vliesstoff, welcher einseitig mit Polymeren beschichtet oder mit einer Folie bestehend aus Polymeren laminiert ist, wobei die Dicke der Polymerbeschichtung oder Laminierung 15 bis 200 µm beträgt und Festigkeit des Verbundes maßgeblich von der Polymerbeschichtung oder Laminierung übernommen wird, wobei das Gewicht des Vliesverbundstoffes 30 bis 180 g/qm beträgt.

12. Verbundvliesstoff nach Anspruch 11,
**dadurch gekennzeichnet, dass**
der Vliesstoff aus synthetische, natürliche oder halbsynthetische Stapelfasern besteht und/oder die Stapelfasern ein ein- oder mehrlagigen Vliesstoff bilden.

13. Verbundvliesstoff nach einem oder mehreren der vorhergehenden Ansprüche,
**dadurch gekennzeichnet, dass**
der Vliesstoff zumindest teilweise in Spinnvliestechnik hergestellt ist und/oder der Vliesstoffes durch Nadeltechnik, Wasserstrahltechnik oder durch thermische Techniken verfestigt ist.

14. Verbundvliesstoff nach einem oder mehreren der vorhergehenden Ansprüche,
**dadurch gekennzeichnet, dass**
der Vliesstoff aus bis zu 70% Polyester und 30% Viskose mit einem Gewicht von ca. 80g/qm besteht.

15. Verbundvliesstoff nach einem oder mehreren der vorhergehenden Ansprüche,
**dadurch gekennzeichnet, dass**
die Vliesstoffoberfläche direkt mit Polymeren extrusionsbeschichtet ist und/oder zur Beschichtung 40g/qm Polypropylen oder Polyester verwendet wird.

16. Verbundvliesstoff nach einem oder mehreren der vorhergehenden Ansprüche,
**dadurch gekennzeichnet, dass**
die Folie aus Polymeren oder die auf den Verbundvliesstoff aufgebrachten Polymere maßgeblich die Festigkeit des Verbundvliesstoffes übernehmen.

17. Verbundvliesstoff nach einem oder mehreren der vorhergehenden Ansprüche,
**dadurch gekennzeichnet, dass**
der Verbundvliesstoff in der Grenzfläche zwischen Polymeren und Vliesstoff eine homogene Verbindung aufweist, welche maßgeblich der Übernahme der Festigkeit des Verbundvliesstoffes durch die Polymere dient.

18. Verbundvliesstoff nach einem oder mehreren der vorhergehenden Ansprüche,
**dadurch gekennzeichnet, dass**
der Verbundvliesstoff eine hohe Anfangsfestigkeit und eine damit verbundene minimale Dehnung bei Kräften bis 30N pro 5 cm aufweist.

19. Verbundvliesstoff nach einem oder mehreren der vorhergehenden Ansprüche,
**dadurch gekennzeichnet, dass**
der Verbundvliesstoff auf Grund der hohen Anfangsfestigkeit einer Dehnung und einer Längung minimiert.

20. Verbundvliesstoff nach einem oder mehreren der vorhergehenden Ansprüche,
**dadurch gekennzeichnet, dass**
der Verbundvliesstoff zur Verhüllung oder Ummantelung oder Verpackung oder dem Schutz von Fahrzeugen, Fahrzeugteilen, oder Maschinen, insbesondere beim Transport dient und/oder der Verbundvliesstoff für Transportanforderungen bestens geeignet ist.

21. Verbundvliesstoff nach einem oder mehreren der vorhergehenden Ansprüche,
**dadurch gekennzeichnet, dass**
durch die Verlagerung der Anforderung von Festigkeit und minimaler Dehnung vom Vliesstoff auf die Polymerbeschichtung oder Folie der Vliesstoff in Bezug auf seine Eigenschaft von Weichheit und Kratzschutz optimierbar ist und/oder durch geeignete Faserauswahl und ein Abweichen von sortenreinen Rohstoffen der Verbundvliesstoff optimal auf thermische, Ultraschall-Hochfrequenzschweißvorgänge, aber auch auf konventionell ausgeführte Verbindungsnähtechniken abstimmbar ist.

22. Verbundvliesstoff nach einem oder mehreren der vorhergehenden Ansprüche,
**dadurch gekennzeichnet, dass**
durch den Einsatz von nicht polymeren Fasern, insbesondere einem Viskoseanteil, eine Armierung einer geschmolzenen Naht erzielbar ist, die weit höhere Nahtfestigkeiten aufweist, als bei einem sortenrein aufgebauten Verbundvliesstoff.

23. Verbundvliesstoff nach einem oder mehreren der vorhergehenden Ansprüche, **gekennzeichnet durch** eine gezielte Faserauswahl und/oder ein Abweichen von sortenreinen Rohstoffen zur Erzeugung einer homogene Verbindung in der Grenzfläche Vlies-Polymere, welche maßgeblich zur Übernahme der Festigkeit und minimaler Dehnung des Verbundvliesstoffes **durch** die Polymere dient.

24. Verbundvliesstoff nach Anspruch 23,
**dadurch gekennzeichnet, dass**
in den Verbundfliesstoff gezielt anteilige Schmelzfasern oder Bicomponenten-Fasern eingebracht sind.

25. Verpackung weitgehend bestehend aus einem Verbundvliesstoff einem oder mehreren Merkmales der vorangehenden Ansprüche.
